# EUROPÄISCHE PATENTSCHRIFT

(11) **EP 1 789 248 B1**
(45) Veröffentlichungstag und Bekanntmachung des Hinweises auf die Patenterteilung: **27.01.2010**
(21) Anmeldenummer: 05769944.9
(22) Anmeldetag: 26.07.2005
(51) Int. Cl.: B29C 49/58, B29C 49/78

(54) **VERFAHREN UND VORRICHTUNG ZUR BLASFORMUNG VON BEHÄLTERN**
METHOD AND DEVICE FOR BLOW FORMING CONTAINERS
PROCEDE ET DISPOSITIF DE SOUFFLAGE DE CONTENANTS

(30) Priorität: 14.09.2004 DE 102004044260
(43) Veröffentlichungstag der Anmeldung: 30.05.2007
(73) Patentinhaber: KHS Corpoplast GmbH & Co. KG, 20539 Hamburg (DE)
(72) Erfinder: LITZENBERG, Michael, 21502 Geesthacht (DE); LINKE, Michael, 22926 Ahrensburg (DE); BERGER, Frank, 22885 Barsbüttel (DE)
(74) Vertreter: Klickow, Hans-Henning
(86) Internationale Anmeldenummer: PCT/DE2005/001315
(87) Internationale Veröffentlichungsnummer: WO 2006/029584

(56) Entgegenhaltungen:
- EP-A- 1 155 808
- DE-A1- 3 111 925
- DE-A1- 4 340 291
- US-A- 4 488 863
- US-A1- 2004 173 949
- PATENT ABSTRACTS OF JAPAN Bd. 018, Nr. 115 (M-1566), 24. Februar 1994 (1994-02-24) -& JP 05 309726 A (HIROKAZU YOSHIOKA; others: 02), 22. November 1993 (1993-11-22)

## Beschreibung

Die Erfindung betrifft ein Verfahren zur Blasformung von Behältern, bei dem ein Vorformling nach einer thermischen Konditionierung innerhalb einer auf einem Blasrad einer Blasmaschine angeordneten Blasform von einer Reckstange gereckt und durch Blasdruckeinwirkung in den Behälter umgeformt wird sowie bei dem zunächst ein von einer Niederdruckversorgung bereitgestellter erster Blasdruck und anschließend ein von einer Hochdruckversorgung bereitgestellter zweiter höherer Blasdruck verwendet und die Blasluft über mindestens ein Blasluftventil zugeführt wird sowie bei dem nach einer Behälterformung wenigstens ein Teil der verwendeten Hochdruckblasluft in die Niederdruckversorgung eingespeist wird, sowie bei dem die Blasluftrückführung in die Niederdruckversorgung durch ein parallel zum Blasdruckventil geschaltetes Rückführventil gesteuert und ein Ventilausgang des Rückführventils mit der Niederdruckversorgung verbunden wird.

Die Erfindung betrifft darüber hinaus eine Vorrichtung zur Blasformung von Behältern, die mindestens eine auf einem Blasrad einer Blasmaschine angeordnete Blasstation mit mindestens einer Blasform sowie mindestens einer Reckstange aufweist und bei der die Blasstation an eine Niederdruckversorgung zur Bereitstellung eines ersten Blasdruckes sowie an eine Hochdruckversorgung zur Bereitstellung eines relativ zum ersten Blasdruck höheren zweiten Blasdruckes angeschlossen ist und bei der eine Blasluftrückführung für nach einer Behälterformung der Blasstation entströmender Hochdruckblasluft in die Niederdruckversorgung verwendet ist, sowie bei der die Blasluftrückführung ein Rückführventil aufweist, das in einem parallel zu einem Blasdruckventil verlaufenden Rückführzweig angeordnet ist und bei der ein Ventilausgang des Rückführventils an die Niederdruckversorgung angeschlossen ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgas-einleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Rückführung verbrauchter Blasluft aus einem Hochdruckbereich in einen Niederdruckbereich wird bereits in der US-A 4,488,863 beschrieben. Eine gerätetechnische Realisierung zur Mehrfachnutzung von Blasluft wird in der DE 43 40 291 A1 erläutert.

Aus der US 2004/173949 A1 ist es bereits bekannt, zusätzlich zu Steuerventilen für die Zuführung eines ersten niedrigeren Blasdruckes und eines zweiten höheren Blasdruckes ein separates Rückführventil zu verwenden, um aus dem geblasenen Behälter abströmende gebrauchte Blasluft einer erneuten Verwendung zuzuführen.

In der DE 43 40 291 A1 wird die Anwendung einer Blasluftrückführung im Bereich einer Blasmaschine beschrieben, die mit einer Mehrzahl von Blasstationen ausgestattet ist, die auf einem rotierenden Blasrad angeordnet sind. Verbrauchte Blasluft einer vorangehenden Blasstation kann hier zur Versorgung einer nachfolgenden Blasstation verwendet werden.

In der US-A-4,488,863 wird das grundsätzliche Verfahren einer Wiederverwendung von Blasluft beschrieben. Nach einer ausreichenden Verfestigung des geblasenen Behälters wird ein Teil der im Behälter enthaltenen Blasluft nicht in eine Umgebung abgeleitet, sondern erneut in die Blasluftversorgung eingespeist.

Die bislang bekannten Verfahren und Vorrichtungen sind noch nicht in ausreichender Weise dafür geeignet, eine Optimierung der Blasluftrückführung derart zu erreichen, daß sowohl eine möglichst große Rückführungsmenge gewährleistet als auch eine unzulässige Druckerhöhung im Niederdruckbereich vermieden wird.

Aufgabe der vorliegenden Erfindung ist es daher, ein Verfahren der einleitend genannten Art derart zu verbessern, daß innerhalb eines zulässigen Druckbereiches eine möglichst große Rückführungsmenge an Blasluft erreicht wird.

Diese Aufgabe wird erfindungsgemäß dadurch gelöst, daß das Rückführventil parallel zu einem Entlüftungsventil sowie in Reihe mit einem Rückschlagventil geschaltet wird und daß das Rückführventil über einen Zwischenspeicher an eine Drehverbindung angeschlossen wird, die einen stationären Teil der Blasmaschine mit dem Blasrad koppelt.

Weitere Aufgabe der vorliegenden Erfindung ist es, eine Vorrichtung der einleitend genannten Art derart zu konstruieren, daß eine optimierte Blasluftrückführung unterstützt wird.

Diese Aufgabe wird erfindungsgemäß dadurch gelöst, daß das Rückführventil parallel zu einem Entlüftungsventil sowie in Reihe mit einem Rückschlagventil angeordnet ist und daß das Rückführventil über einen Zwischenspeicher an eine Drehverbindung angeschlossen ist, die als Kopplung zwischen einem stationären Teil der Blasmaschine und dem Blasrad ausgebildet ist.

Durch die Verwendung eines in einem separaten Rückführzweig angeordneten Rückführventiles ist es möglich, die Blasluftrückführung unabhängig von einer Schaltung des Blasdruckventils zu realisieren, wobei das Blasluftventil vorzugsweise zur Zuführung der Niederdruckblasluft verwendet wird. Insbesondere unterstützt eine derartige Verwendung eines separaten Rückführventils die Realisierung einer Druckbegrenzung im Niederdruckbereich, ohne daß ein Ablassen von Druckluft zur Vermeidung einer unzulässigen Druckerhöhung erforderlich ist.

Zur Vorgabe einer Strömungsrichtung im Rückführzweig ausschließlich von der Blasstation in Richtung auf die Niederdruckversorgung wird vorgeschlagen, daß das Rückführventil in Reihe mit einem Rückschlagventil geschaltet wird.

Eine Optimierung der Blasluftrückführung wird dadurch unterstützt, daß der Druck im Bereich der Niederdruckversorgung gemessen wird.

Insbesondere erweist es sich als vorteilhaft, daß mindestens eines der Ventile in Abhängigkeit vom gemessenen Druck gesteuert wird.

Ein typisches Hochdruckniveau wird dadurch realisiert, daß im Bereich der Hochdruckversorgung ein Druck von etwa 40 bar bereitgestellt wird.

Zur Durchführung einer Vorblasphase erweist es sich als zweckmäßig, daß im Bereich der Niederdruckversorgung ein Druck von etwa 20 bar bereitgestellt wird.

Eine weitere Optimierung der Blasluftrückführung kann dadurch erfolgen, daß mindestens ein Teil der Druckluft im Bereich der Niederdruckversorgung steuerbar in einen Arbeitsluftbereich rückführbar ist.

Gemäß einer typischen Ausführungsform ist daran gedacht, daß im Arbeitsluftbereich ein Druck von etwa 10 bar bereitgestellt wird.

Eine weitere Ausführungsvariante zur Optimierung der Druckluftrückführung besteht darin, daß mindestens ein Teil der Druckluft aus dem Niederdruckbereich gesteuert als Vordruck zu einem Hochdruckkompressor zurückgeführt wird.

Eine weitere Vergleichmäßigung des Druckniveaus wird dadurch unterstützt, daß ein Volumenspeicher für die Niederdruckluft verwendet wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: ein Blockschaltbild zur Veranschaulichung der pneumatischen Funktionskomponenten bei der Blasluftrückführung,
- Fig. 6: eine gegenüber der Darstellung in Fig. 5 abgewandelte Ausführungsform, bei der eine Reduzier-Verteilstation für den niedrigeren Druck auf dem Blasrad angeordnet ist,
- Fig. 7: eine gegenüber Fig. 6 abgewandelte Ausführungsform mit zusätzlicher Steuerung im Bereich der Reduzier-Verteilstation für den niedrigeren Druck und
- Fig. 8: eine nochmals modifizierte Ausführungsform, bei der lediglich eine Hochdruckversorgung des Blasrades vorgesehen ist und der niedrigere Druck steuerungstechnisch im Bereich des Blasrades erzeugt wird.

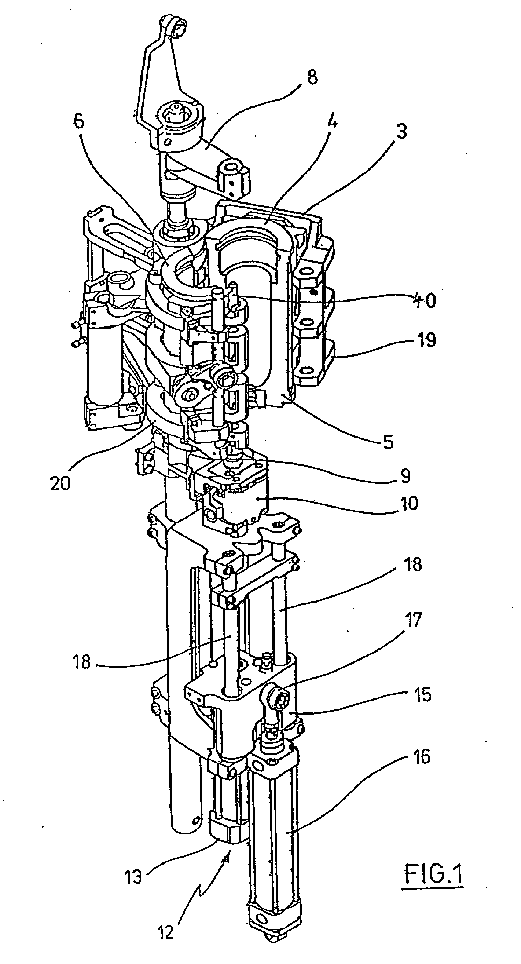

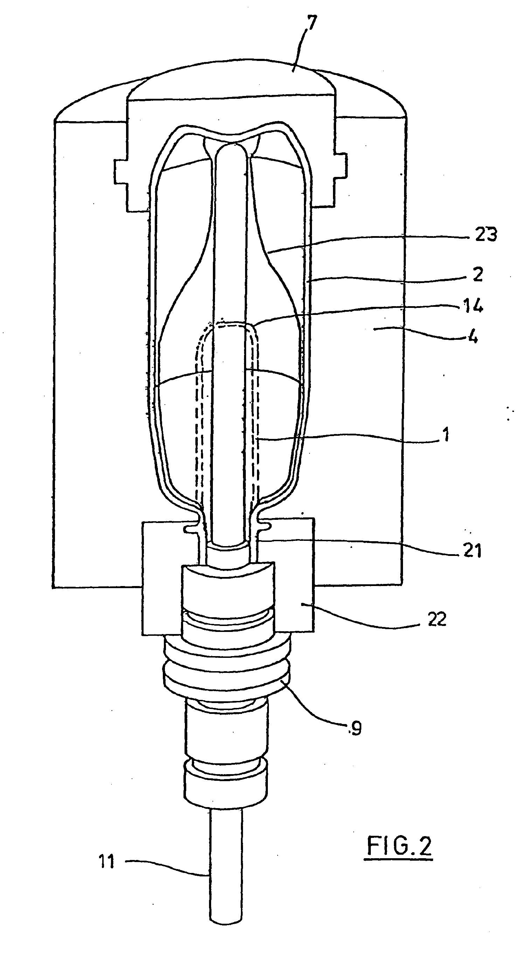

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Posi-tionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

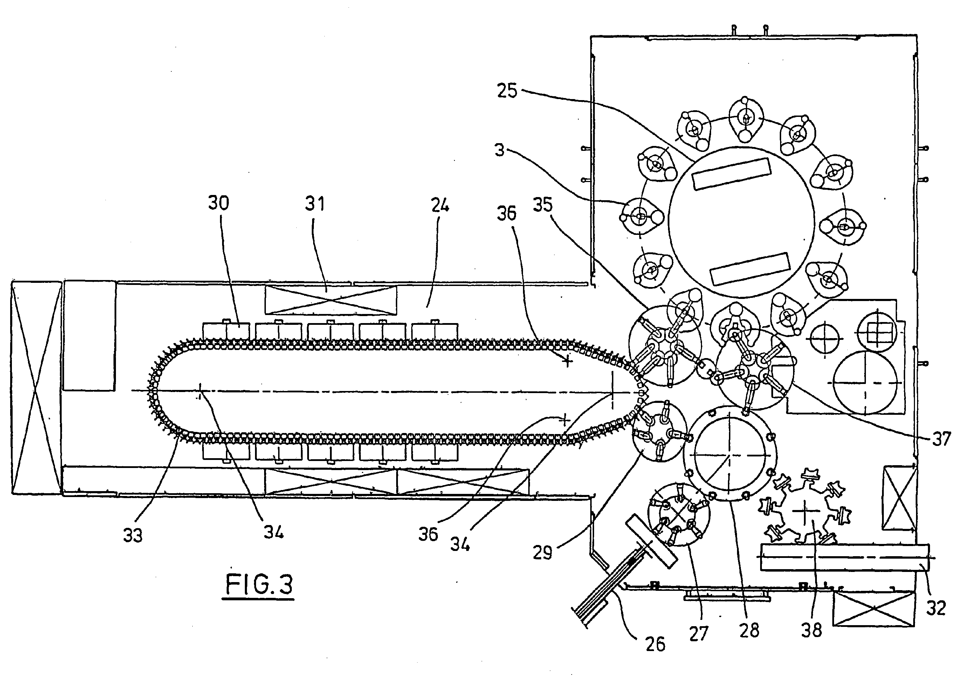

Fig. 3 zeigt den grundsätzlichen Aufbau einer Blasmaschine, die mit einer Heizstrecke (24) sowie einem rotierenden Blasrad (25) versehen ist. Ausgehend von einer Vorform-lingseingabe (26) werden die Vorformlinge (1) von Über-gaberädern (27, 28, 29) in den Bereich der Heizstrecke (24) transportiert. Entlang der Heizstrecke (24) sind Heiz-strahler (30) sowie Gebläse (31) angeordnet, um die Vor-formlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Haupt-blasphase unterteilt, in der Gas mit einem höheren Druck-niveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

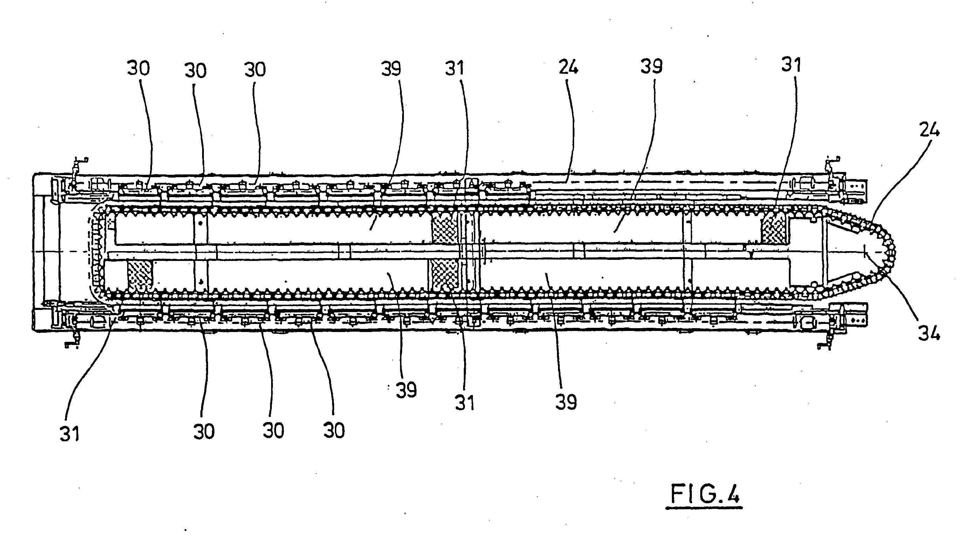

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zuge-ordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

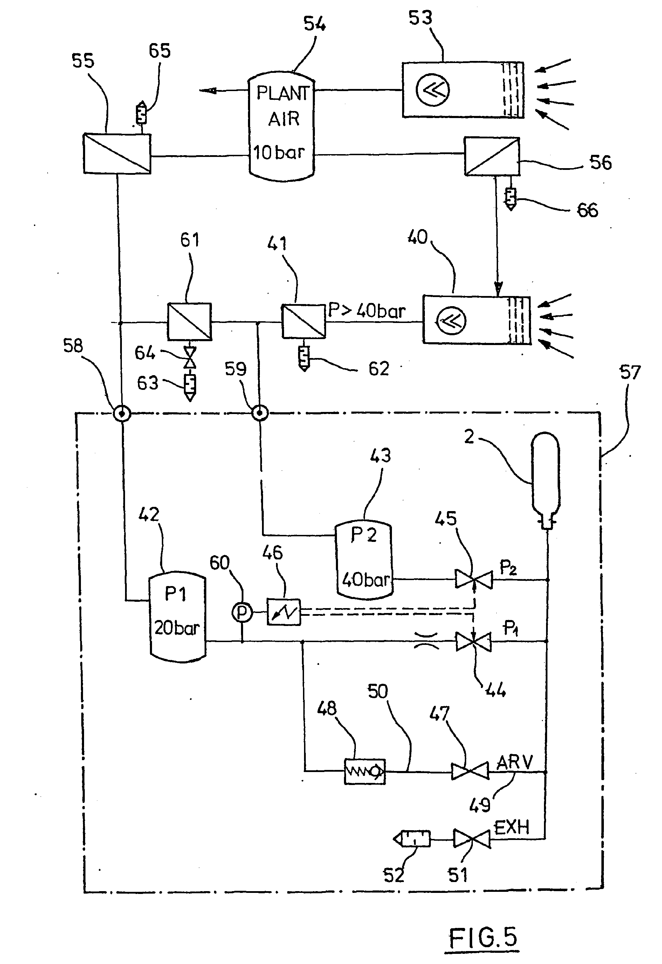

Fig. 5 zeigt schematisch ein Blockschaltbild der Druckgasversorgung. Der eingezeichnete Behälter (2) wurde gleichzeitig auch stellvertretend für den Vorformling (1) sowie die Behälterblase (23) abgebildet. Über einen Hochdruckkompressor (40) wird Druck eines Ausgangsdruckniveaus, beispielsweise oberhalb von 40 bar, bereitgestellt. Über einen oder mehrere Druckwandler (41, 61) erfolgt beim dargestellten Ausführungsbeispiel eine Druckabsenkung auf zwei unter-schiedliche Versorgungsdruckniveaus. Das höhere Druckniveau beträgt hier etwa 40 bar, das niedrigere Druckniveau etwa 20 bar. Die Druckwandler (41, 61) sind als Reduzier-Verteilstationen ausgebildet und mit Schalldämpfern (62, 63) für in die Umgebung abgeleitete Druckluft versehen. Der Schalldämpfer (63) ist über ein Entlüftungsventil (64) mit dem Druckwandler (61) verbunden.

Über Kessel (42, 43) wird ein Vorratsvolumen für die jeweiligen Drücke bereitgestellt, so daß auch bei einer getakteten Druckentnahme das jeweilige Druckniveau zumindest näherungsweise aufrecht erhalten bleibt. Die gesteuerte Druckgaszuführung erfolgt unter Verwendung von Ventilen (44, 45). Die Ventile (44, 45) sind an eine Steuerung (46) angeschlossen, die die jeweiligen Schaltzeiten der Ventile (44, 45) koordiniert.

Parallel zum Ventil (44) für die Zuführung des niedrigeren Blasdruckes ist ein Rückführventil (47) angeordnet, das in Reihe mit einem Rückschlagventil (48) geschaltet ist. Ein Ventileingang (49) des Rückführventils (47) ist mit der Blasstation (3) verbunden, ein Ventilausgang (50) des Rückführventils (47) ist an das Rückschlagventil (48) angeschlossen. Das Rückschlagventil (48) ermöglicht lediglich eine Strömung von der Blasstation (3) durch das Rückführventil (47) hindurch in Richtung auf die Niederdruckversorgung. Zur Entlüftung des Innenraumes des Behälters (2) gegenüber einer Umgebung wird ein Entlüftungsventil (51) verwendet, das mit einem Schalldämpfer (52) gekoppelt ist. Vorzugsweise sind auch die steuerbaren Ventile (47, 51) an die Steuerung (46) angeschlossen.

Entsprechend einer erweiterten Ausführungsform ist zusätzlich ein Arbeitsluftkompressor (53) verwendet, der Arbeitsluft in einem Druckbereich von etwa 10 bar bereitstellt. Zur Speicherung der Arbeitsluft wird ein Arbeitsluftkessel (54) verwendet. Über eine Steuereinheit (55) ist es möglich, nach einer entsprechenden Druckreduzierung Druckluft aus dem Bereich der Niederdruckversorgung in den Bereich der Arbeitsluftversorgung überzuleiten. Die Steuereinheit (55) ist jeweils als eine Reduzier-Verteilerstation ausgebildet.

Durch die Verwendung der Steuereinheit (55) ist es möglich, bei einem Erreichen eines maximal zulässigen oberen Druckpegels im Bereich der Niederdruckversorgung eine Druckluftüberleitung in den Arbeitsluftbereich vorzunehmen. Die Arbeitsleistung des Arbeitsluftkompressors (53) kann hierdurch vermindert werden.

Gemäß einer weiteren alternativen oder ergänzenden Ausführungsform ist es auch möglich, den Arbeitsluftkessel (54) oder den Kessel (42) für die Niederdruckblasluft über eine Steuereinheit (56) an den Eingang des Hockdruckkompressors (40) anzuschließen. Dem Hochdruckkompressor (40) würde hierdurch nicht Luft auf einem Umgebungsdruckniveau, sondern bereits vorkomprimierte Druckluft zugeführt werden. Durch eine derartige Betriebsweise kann die Arbeitsleistung des Hochdruckkompressors (40) vermindert und somit Energie eingespart werden. Ein Vorteil dieser kaskadierten Ausführungsvarianten ist es, die Gesamtenergiemenge für den Betrieb der Einrichtung zu minimieren. Die Steuerungseinheiten (55, 56) sind jeweils mit einem Schalldämpfer (65, 66) zur Entlüftung versehen.

Bei einer Anwendung der Druckluftversorgung gemäß Fig. 5 für eine Blasmaschine mit einem rotierenden Blasrad (25) sind die in einem Mobilbereich (57) eingezeichneten Vorrichtungskomponenten auf dem rotierenden Blasrad (25) angeordnet und die weiteren Komponenten sind stationär auf dem Maschinenbett installiert. Zur Kopplung des stationären Bereiches mit dem Mobilbereich (57) werden Dreheinführungen (58, 59) verwendet. Die Dreheinführungen (58, 59) können beispielsweise im Bereich einer relativ zu einer Rotationsachse koaxial konstruierten Drehkupplung zusammengefaßt werden.

Gemäß einem typischen Verfahrensablauf erfolgt, zunächst nach einem Öffnen des Ventils (44) ein Blasen des Behälters (2) mit dem niedrigeren Blasdruck und anschließend nach einem Schließen des Ventils (44) und einem Öffnen des Ventils (45) ein Fertigblasen mit dem höheren Blasdruck. Nach Erreichen einer ausreichenden Stabilität des Behälters (2) innerhalb der Blasform (4) öffnet das Rückführventil (47) nach einem vorherigen Schließen des Ventils (45) und es erfolgt eine Rückführung von aus dem Behälter (2) herausströmender Blasluft in den Bereich der Niederdruckversorgung. Nach einem Abschluß des Rückspeisungsvorganges öffnet das Entlüftungsventil (51) und der Innendruck im Behälter (2) wird auf einen Umgebungsdruck abgesenkt.

Aus dem Bereich einer Blasstation (3) in den Bereich der Niederdruckversorgung zurückströmende Blasluft wird über das Ventil (44) bei einer im Prozeßablauf nachfolgenden Blasstation wieder verwendet. In Abhängigkeit von der Rückführmenge und der Verbrauchsmenge stellt sich im Bereich des Kessels (42) ein innerhalb eines Toleranzbands variierender Druckverlauf ein. Zur Optimierung der Rückführmenge sowie zur Minderung der Schwankungsbreite des Druckes im Bereich der Niederdruckversorgung kann die bereits geschilderte Weiterleitung von Druckluft in den Bereich der Arbeitsluftversorgung oder die Verwendung der als Rückführmenge als Vordruck für den Hochdruckkompressor (40) erfolgen.

Nach einer bevorzugten Betriebsweise ist es möglich, im Bereich der Niederdruckversorgung einen Drucksensor (60) anzuordnen und diesen an die Steuerung (46) anzuschließen. Die Steuerung (46) kann hierdurch eine Optimierung der Schaltzeiten für das Rückführventil (47) sowie das Entlüftungsventil (51) vornehmen.

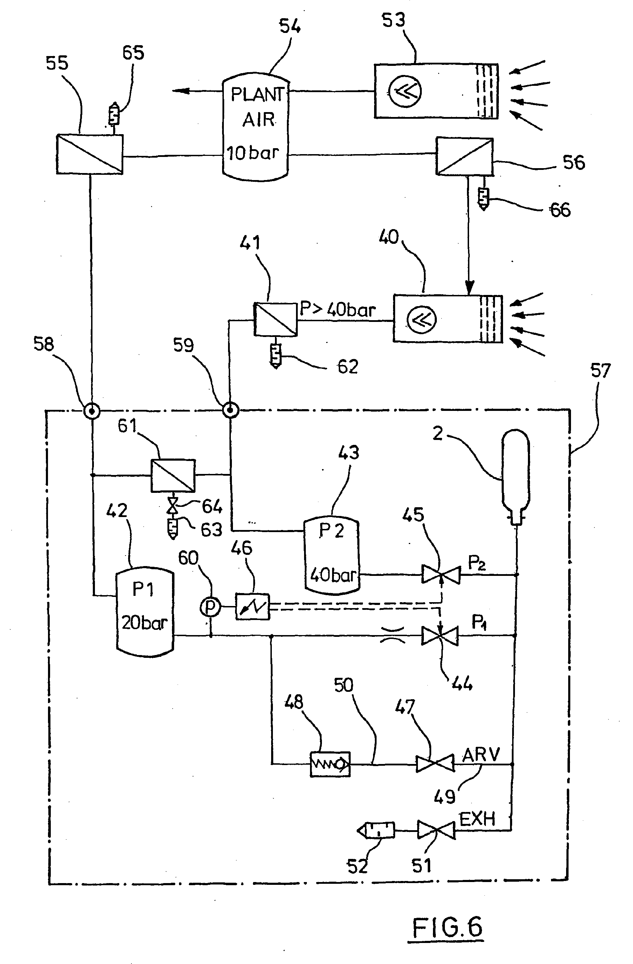

Fig. 6 zeigt eine gegenüber der Darstellung in Fig. 5 abgewandelte Ausführungsform. Der Druckwandler (61) für den niedrigeren Druck ist hier nicht stationär außerhalb des Mobilbereiches (57), sondern im Mobilbereich (57) installiert. Es erfolgt somit eine Anordnung des Druckwandlers (61) im Bereich des rotierenden Blasrades (25). Die Druckreglung erfolgt hierdurch in örtliche Nähe zum Kessel (42), so daß eine genauere Druckregelung unterstützt wird.

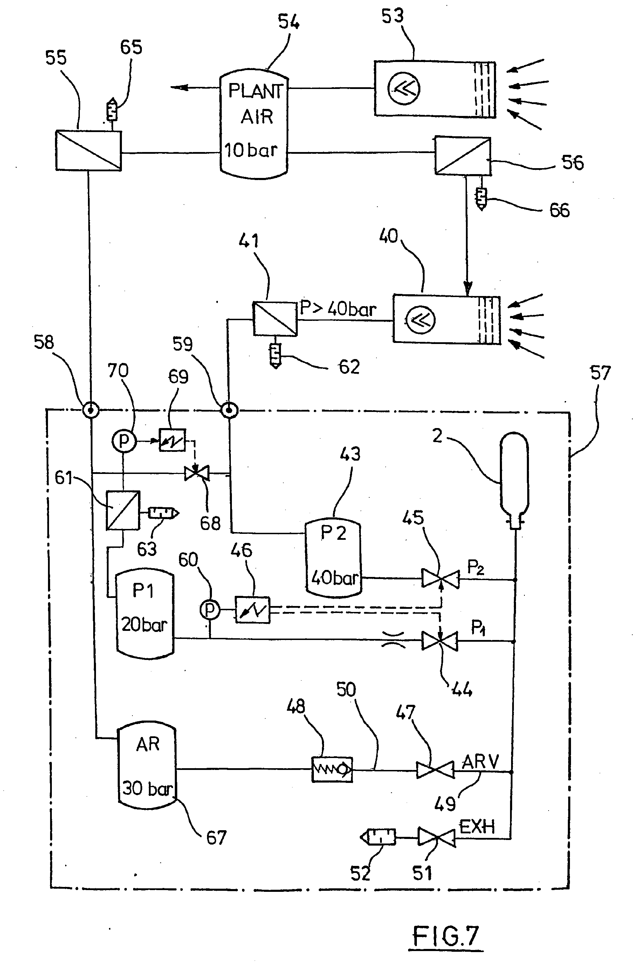

Gemäß der Ausführungsform in Fig. 7 erfolgt die Druckluftrückführung über das Rückführventil (47) zunächst in den Bereich eines Zwischenspeichers (67), der ein Druckniveau zwischen dem niedrigeren Druck P1 und dem höheren Druck P2 aufweist. Ein typischer Druck für den Zwischenspeicher (67) beträgt etwa 30 bar. Der Zwischenspeicher (67) ist darüber hinaus an die Drehverbindung (58) angeschlossen. Zusätzlich sind die Drehverbindung (58) und der Zwischenspeicher (67) gemeinsam an den Eingang des Druckwandlers (61) für den niedrigeren Druck angeschlossen. Der Eingang des Druckwandlers (61) ist darüber hinaus über ein Sperrventil (68) mit dem Kessel (43) verbunden. Das Sperrventil (68) ist von einer Steuereinheit (69) betätigt, an die ein Drucksensor (70) zur Erfassung eines Eingangsdruckes des Druckwandlers (61) angeschlossen ist. Über die Drehverbindung (58) erfolgt sowohl bei der Ausführungsform gemäß Fig. 6 als auch bei der Ausführungsform gemäß Fig. 7 lediglich eine Ableitung von Druckluft aus dem Mobilbereich (57) in den Bereich des Arbeitsluftkessels (54). Bei der Ausführungsform gemäß Fig. 5 erfolgt über die Drehverbindung (58) auch eine Speisung der Mobileinheit (57) mit dem niedrigeren Druck.

Gemäß der Ausführungsform in Fig. 7 wird der Druckwandler (61) so lange mit Druckluft aus dem Bereich des Zwischenspeichers (67) versorgt, wie hier ein ausreichendes Druckniveau vorliegt. Zusätzliche Druckluft kann über das Sperrventil (68) aus dem Hochdruckkreis bereitgestellt werden. Die Druckluftrückführung zum Eingang des Druckwandlers (61) weist den Vorteil auf, daß Druckschwankungen im Bereich des Kessels (42) minimiert werden.

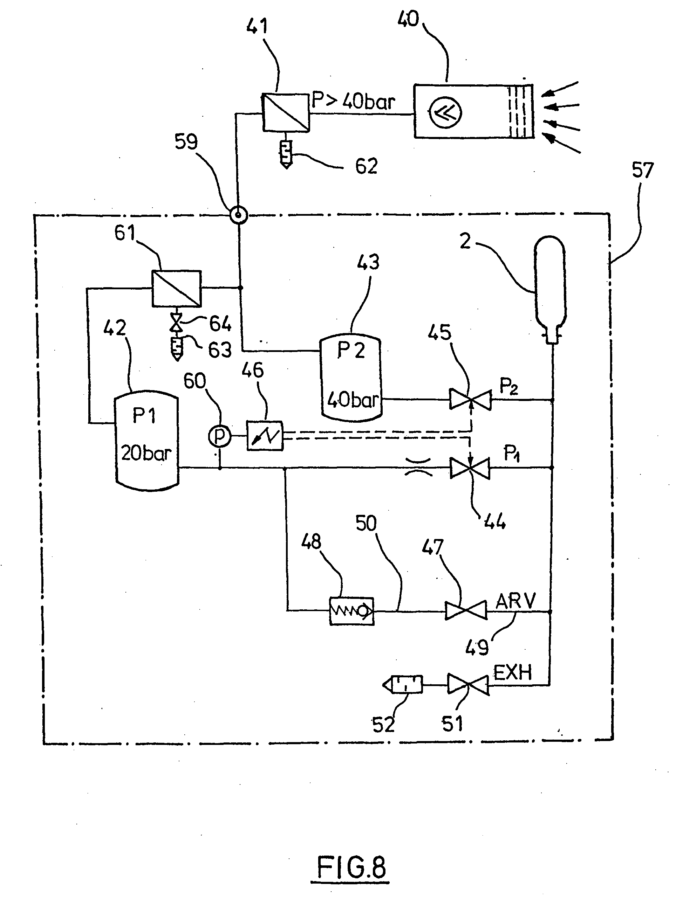

Gemäß der Ausführungsform in Fig. 8 wird auf die zweite Drehverbindung (58) verzichtet. Der Mobilbereich (57) wird nur über die Drehverbindung (59) mit Hochdruck gespeist. Alle weiteren Druckwandlungen erfolgen innerhalb des Mobilbereiches (57). Gezeigt ist in Fig. 8 eine Druckluftrückführung ähnlich zu Fig. 5 und Fig. 6. Grundsätzlich ist aber auch bei dieser Ausführungsvariante eine Druckluftrückführung zum Eingang des Druckwandlers (61) entsprechend Fig. 7 möglich.

## Patentansprüche

1. Verfahren zur Blasformung von Behältern (2), bei dem ein Vorformling (1) nach einer thermischen Konditionierung innerhalb einer auf einem Blasrad (25) einer Blasmaschine angeordneten Blasform (4) von einer Reckstange (11) gereckt und durch Blasdruckeinwirkung in den Behälter (2) umgeformt wird sowie bei dem zunächst ein von einer Niederdruckversorgung bereitgestellter erster Blasdruck und anschließend ein von einer Hochdruckversorgung bereitgestellter zweiter höherer Blasdruck verwendet und die Blasluft über mindestens ein Blasluftventil (44, 45) zugeführt wird sowie bei dem nach einer Behälterformung wenigstens ein Teil der verwendeten Hochdruckblasluft in die Niederdruckversorgung eingespeist wird, sowie bei dem die Blasluftrückführung in die Niederdruckversorgung durch ein parallel zum Blasdruckventil (44, 45) geschaltetes Rückführventil (47) gesteuert und ein Ventilausgang (50) des Rückführventils (47) mit der Niederdruckversorgung verbunden wird, **dadurch gekennzeichnet, daß** das Rückführventil (47) parallel zu einem Entlüftungsventil (51) sowie in Reihe mit einem Rückschlagventil (48) geschaltet wird und daß das Rückführventil (47) über einen Zwischenspeicher (67) an eine Drehverbindung (58) angeschlossen wird, die einen stationären Teil der Blasmaschine mit dem Blasrad (25) koppelt.

2. Verfahren nach Anspruch 1, **dadurch gekennzeichnet, daß** das Rückführventil (47) in Reihe mit einem Rückschlagventil (48) geschaltet wird.

3. Verfahren nach Anspruch 1 oder 2, **dadurch gekennzeichnet, daß** der Druck im Bereich der Niederdruckversorgung gemessen wird.

4. Verfahren nach einem der Ansprüche 1 bis 3, **dadurch gekennzeichnet, daß** mindestens eines der Ventile (44, 45, 47) in Abhängigkeit vom gemessenen Druck gesteuert wird.

5. Verfahren nach einem der Ansprüche 1 bis 4, **dadurch gekennzeichnet, daß** im Bereich der Hochdruckversorgung ein Druck von etwa 40 bar bereitgestellt wird.

6. Verfahren nach einem der Ansprüche 1 bis 5, **dadurch gekennzeichnet, daß** im Bereich der Niederdruckversorgung ein Druck von etwa 20 bar bereitgestellt wird.

7. Verfahren nach einem der Ansprüche 1 bis 6, **dadurch gekennzeichnet, daß** mindestens ein Teil der Druckluft im Bereich der Niederdruckversorgung steuerbar in einen Arbeitsluftbereich rückführbar ist.

8. Verfahren nach einem der Ansprüche 1 bis 7, **dadurch gekennzeichnet, daß** im Arbeitsluftbereich ein Druck von etwa 10 bar bereitgestellt wird.

9. Verfahren nach einem der Ansprüche 1 bis 8, **dadurch gekennzeichnet, daß** mindestens ein Teil der Druckluft aus dem Niederdruckbereich gesteuert als Vordruck zu einem Hochdruckkompressor (40) zurückgeführt wird.

10. Verfahren nach einem der Ansprüche 1 bis 9, **dadurch gekennzeichnet, daß** ein Volumenspeicher für die Niederdruckluft verwendet wird.

11. Vorrichtung zur Blasformung von Behältern (2), die mindestens eine auf einem Blasrad (25) einer Blasmaschine angeordnete Blasstation (3) mit mindestens einer Blasform (4) sowie mindestens einer Reckstange (11) aufweist und bei der die Blasstation (3) an eine Niederdruckversorgung zur Bereitstellung eines ersten Blasdruckes sowie an eine Hochdruckversorgung zur Bereitstellung eines relativ zum ersten Blasdruck höheren zweiten Blasdrukkes angeschlossen ist und bei der eine Blasluftrückführung für nach einer Behälterformung der Blasstation (3) entströmender Hochdruckblasluft in die Niederdruckversorgung verwendet ist, sowie bei der die Blasluftrückführung ein Rückführventil (47) aufweist, das in einem parallel zu einem Blasdruckventil (44, 45) verlaufenden Rückführzweig angeordnet ist und bei der ein ventilausgang (50) des Rückführventils (47) an die Niederdruckversorgung angeschlossen ist, **dadurch gekennzeichnet, daß** das Rückführventil (47) parallel zu einem Entlüftungsventil (51) sowie in Reihe mit einem Rückschlagventil (48) angeordnet ist und daß das Rückführventil (47) über einen Zwischenspeicher (42, 67) an eine Drehverbindung (58) angeschlossen ist, die als Kopplung zwischen einem stationären Teil der Blasmaschine und dem Blasrad (25) ausgebildet ist.

12. Vorrichtung nach Anspruch 11, **dadurch gekennzeichnet, daß** das Rückführventil (47) in Reihe mit einem Rückschlagventil (48) gestaltet ist.

13. Vorrichtung nach Anspruch 11 oder 12, **dadurch gekennzeichnet, daß** im Bereich der Niederdruckversorgung mindestens ein Drucksensor (60) angeordnet ist.

14. Vorrichtung nach einem der Ansprüche 11 bis 13, **dadurch gekennzeichnet, daß** mindestens eines der Ventile (44, 45, 47) an eine Steuerung (46) zur Steuerung in Abhängigkeit vom Meßsignal des Drucksensors (60) angeschlossen ist.

15. Vorrichtung nach einem der Ansprüche 11 bis 14, **dadurch gekennzeichnet, daß** die Hochdruckversorgung einen Betriebsdruck von etwa 40 bar aufweist.

16. Vorrichtung nach einem der Ansprüche 11 bis 15, **dadurch gekennzeichnet, daß** die Niederdruckversorgung einen Betriebsdruck von etwa 20 bar aufweist.

17. Vorrichtung nach einem der Ansprüche 11 bis 16, **dadurch gekennzeichnet, daß** die Niederdruckversorgung über eine Steuereinheit (50) zur Druckrückführung an einen Arbeitsluftbereich angeschlossen ist.

18. Vorrichtung nach einem der Ansprüche 11 bis 17, **dadurch gekennzeichnet, daß** der Arbeitsluftbereich einen Betriebsdruck von etwa 10 bar aufweist.

19. Vorrichtung nach einem der Ansprüche 11 bis 18, **dadurch gekennzeichnet, daß** die Niederdruckversorgung zur Druckrückführung über eine Steuereinheit (45) an eine Vordruckstufe eines Hochdruckkompressors (40) angeschlossen ist.

20. Vorrichtung nach einem der Ansprüche 11 bis 19, **dadurch gekennzeichnet, daß** im Niederdruckbereich mindestens ein Kessel (42) zur Speicherung von Niederdruckluft angeordnet ist.

21. Vorrichtung nach einem der Ansprüche 11 bis 20, **dadurch gekennzeichnet, daß** das Blasrad (25) mit lediglich einer Drehverbindung (59) zur Zuführung von Hochdruckblasluft versehen ist und mindestens ein Druckreduzierelement zur Bereitstellung eines vom Hochdruck abweichenden zweiten Druckes auf dem Blasrad (25) angeordnet ist.

22. Vorrichtung nach einem der Ansprüche 11 bis 21, **dadurch gekennzeichnet, daß** das Rückführventil (47) über einen Zwischenspeicher (67) mit einem Eingang eines Druckwandlers (61) für die Niederdruckversorgung verbunden ist.

## Claims

1. Method for blow moulding containers (2), in which a parison (1) is stretched inside a blow mould (4) disposed on a blowing wheel (25) of a blowing machine by a stretch rod (11) after thermal conditioning and shaped into the container (2) by the action of blowing pressure, and in which a first blowing pressure provided by a low pressure supply is firstly used and a second higher blowing pressure provided by a high pressure supply is subsequently used and the blow air is supplied via at least one blow air valve (44, 45), and in which, after a container has been moulded, at least some of the used high pressure blow air is fed into the low pressure supply, and in which the blow air return into the low pressure supply is controlled by a return valve (47) which is connected in parallel with the blowing pressure valve (44, 45), and a valve outlet (50) of the return valve (47) is connected to the low pressure supply, **characterised in that** the return valve (47) is connected in parallel with a vent valve (51) and in series with a non-return valve (48), and that the return valve (47) is connected via an intermediate store (67) to a rotary connection (58) which couples a stationary part of the blowing machine to the blowing wheel (25).

2. Method according to Claim 1, **characterised in that** the return valve (47) is connected in series with a non-return valve (48).

3. Method according to Claim 1 or 2, **characterised in that** the pressure in the region of the low pressure supply is measured.

4. Method according to any one of Claims 1 to 3, **characterised in that** at least one of the valves (44, 45, 47) is controlled as a function of the measured pressure.

5. Method according to any one of Claims 1 to 4, **characterised in that** a pressure of approximately 40 bar is provided in the region of the high pressure supply.

6. Method according to any one of Claims 1 to 5, **characterised in that** a pressure of approximately 20 bar is provided in the region of the low pressure supply.

7. Method according to any one of Claims 1 to 6, **characterised in that** at least some of the compressed air in the region of the low pressure supply can be returned to a working air region in a controllable manner.

8. Method according to any one of Claims 1 to 7, **characterised in that** a pressure of approximately 10 bar is provided in the working air region.

9. Method according to any one of Claims 1 to 8, **characterised in that** at least some of the compressed air from the low pressure region is returned as supply pressure to a high pressure compressor (40) in a controlled manner.

10. Method according to any one of Claims 1 to 9, **characterised in that** a volume store is used for the low pressure air.

11. Device for blow moulding containers (2), which has at least one blowing station (3) disposed on a blowing wheel (25) of a blowing machine with at least one blow mould (4) and at least one stretch rod (11), and in which the blowing station (3) is connected to a low pressure supply for providing a first blowing pressure and to a high pressure supply for providing a second blowing pressure which is higher relative to the first blowing pressure, and in which a blow air return into the low pressure supply is used for high pressure blow air which flows from the blowing station (3) after a container has been moulded, and in which the blow air return has a return valve (47) which is disposed in a return branch extending parallel to a blowing pressure valve (44, 45), and in which a valve outlet (50) of the return valve (47) is connected to the low pressure supply, **characterised in that** the return valve (47) is disposed in parallel with a vent valve (51) and in series with a non-return valve (48), and that the return valve (47) is connected via an intermediate store (42, 67) to a rotary connection (58), which is formed as a coupling between a stationary part of the blowing machine and the blowing wheel (25).

12. Device according to Claim 11, **characterised in that** the return valve (47) is connected in series with a non-return valve (48).

13. Device according to Claim 11 or 12, **characterised in that** at least one pressure sensor (60) is disposed in the region of the low-pressure supply.

14. Device according to any one of Claims 11 to 13, **characterised in that** at least one of the valves (44, 45, 57) is connected to a control (46) so as to be controlled as a function of the measurement signal of the pressure sensor (60).

15. Device according to any one of Claims 11 to 14, **characterised in that** the high pressure supply has an operating pressure of approximately 40 bar.

16. Device according to any one of Claims 11 to 15, **characterised in that** the low pressure supply has an operating pressure of approximately 20 bar.

17. Device according to any one of Claims 11 to 16, **characterised in that** the low pressure supply is connected via a control unit (50) to a working air region for pressure return.

18. Device according to any one of Claims 11 to 17, **characterised in that** the working air region has an operating pressure of approximately 10 bar.

19. Device according to any one of Claims 11 to 18, **characterised in that** the low pressure supply is connected via a control unit (45) to a supply pressure stage of a high pressure compressor (40) for pressure return.

20. Device according to any one of Claims 11 to 19, **characterised in that** at least one chamber (42) for storing low pressure air is disposed in the low pressure region.

21. Device according to any one of Claims 11 to 20, **characterised in that** the blowing wheel (25) is provided with just one rotary connection (59) for supplying high pressure blow air and at least one pressure-reducing element for providing a second pressure which differs from the high pressure is disposed on the blowing wheel (25).

22. Device according to any one of Claims 11 to 21, **characterised in that** the return valve (47) is connected via an intermediate store (67) to an input of a pressure transducer (61) for the low pressure supply.

## Revendications

1. Procédé pour le formage par soufflage de récipients (2), dans lequel une préforme (1), après un conditionnement thermique à l'intérieur d'un moule (4), qui est disposé sur une roue de soufflage (25) d'une machine de soufflage, est étiré au moyen d'une barre d'étirage (11) et transformé en un récipient (2) sous l'effet d'une pression de soufflage, ainsi que dans lequel on utilise d'abord une première pression de soufflage, délivrée par un système d'alimentation en basse pression, et, ensuite, une deuxième pression plus élevée, délivrée par un système d'alimentation en haute pression, et dans lequel l'air de soufflage est admis par l'intermédiaire d'au moins une soupape d'air de soufflage (44, 45), ainsi que dans lequel, après un formage de récipient, au moins une partie de l'air de soufflage à haute pression utilisé approvisionne le système d'alimentation en basse pression, ainsi que dans lequel le retour de l'air de soufflage dans le système d'alimentation en basse pression est commandé par une soupape de recyclage (47), qui est connectée en parallèle par rapport à la soupape de pression de soufflage (44, 45), et une sortie de soupape (50) de la soupape de recyclage (47) est reliée au système d'alimentation en basse pression, **caractérisé en ce que** la soupape de recyclage (47) est connectée en parallèle par rapport à une soupape de purge d'air (51) ainsi qu'en série avec une soupape de retenue (48), et que la soupape de recyclage (47) est raccordée, par l'intermédiaire d'un entrepôt (67), à un raccord tournant (58), qui relie une partie fixe de la machine de soufflage à la roue de soufflage (25).

2. Procédé selon la revendication 1, **caractérisé en ce que** la soupape de recyclage (47) est connectée en série avec une soupape de retenue (48).

3. Procédé selon revendication 1 ou 2, **caractérisé en ce que** la pression est mesurée dans la zone de l'alimentation en basse pression.

4. Procédé selon l'une des revendications 1 à 3, **caractérisé en ce que** l'une des soupapes (44, 45, 47) au moins est commandée en fonction de la pression mesurée.

5. Procédé selon l'une des revendications 1 à 4, **caractérisé en ce que**, dans la zone de l'alimentation en haute pression, une pression d'environ 40 bar est disponible.

6. Procédé selon l'une des revendications 1 à 5, **caractérisé en ce que**, dans la zone de l'alimentation en basse pression, une pression d'environ 20 bars est disponible.

7. Procédé selon l'une des revendications 1 à 6, **caractérisé en ce qu'**au moins une partie de l'air comprimé, dans la zone de l'alimentation en basse pression, peut être reconduit dans une zone d'air de service réglable.

8. Procédé selon l'une des revendications 1 à 7, **caractérisé en ce que**, dans la zone d'air de service, une pression d'environ 10 bars est disponible.

9. Procédé selon l'une des revendications 1 à 8, **caractérisé en ce qu'**au moins une partie de l'air comprimé, en provenance de la zone de basse pression, est reconduite, en tant que pression d'admission commandée, à un compresseur à haute pression (40).

10. Procédé selon l'une des revendications 1 à 9, **caractérisé en ce que** l'on utilise un réservoir volumétrique pour l'air comprimé à basse pression.

11. Dispositif pour le formage par soufflage de récipients (2), qui présente au moins une station de soufflage (3), disposée sur une roue de soufflage (25) d'une machine de soufflage, avec au moins un moule de soufflage (4), ainsi qu'au moins une barre d'étirage (11), et dans lequel la station de soufflage (3) est raccordée à un système d'alimentation en basse pression pour la fourniture d'une première pression de soufflage, ainsi qu'à un système d'alimentation en haute pression pour la fourniture d'une deuxième pression relativement plus élevée que la première pression, et dans lequel l'air de soufflage haute pression, qui s'échappe de la station de soufflage (3), après le formage d'un récipient, est recyclé et utilisé dans le système d'alimentation en basse pression, ainsi que dans lequel le système de recyclage d'air de soufflage présente une soupape de recyclage (47), qui est disposée dans un embranchement de recyclage parallèle à la soupape de pression de soufflage (44, 45), et dans lequel une sortie de soupape (50) de la soupape de recyclage (47) est raccordée au système d'alimentation en basse pression, **caractérisé en ce que** la soupape de recyclage (47) est connectée en parallèle par rapport à une soupape de purge d'air (51), ainsi qu'en série avec une soupape de retenue (48) et que la soupape de recyclage (47) est raccordée, par l'intermédiaire d'un entrepôt (42, 67) à un raccord tournant (58), qui relie une partie fixe de la machine de soufflage à la roue de soufflage (25).

12. Dispositif selon la revendication 11, **caractérisé en ce que** la soupape de recyclage (47) est connectée en série avec une soupape de retenue (48).

13. Dispositif selon revendication 11 ou 12, **caractérisé en ce que**, dans la zone d'alimentation en basse pression, est installé au moins un capteur de pression (60) .

14. Dispositif selon l'une des revendications 11 à 13, **caractérisé en ce que** l'une des soupapes (44, 45, 47), au moins, est raccordée à une commande (46) pour la commande en fonction du signal de mesure du capteur de pression (60).

15. Dispositif selon l'une des revendications 11 à 14, **caractérisé en ce que** l'alimentation en haute pression présente une pression de service d'environ 40 bars.

16. Dispositif selon l'une des revendications 11 à 15, **caractérisé en ce que** l'alimentation en basse pression présente une pression de service d'environ 20 bars.

17. Dispositif selon l'une des revendications 11 à 16, **caractérisé en ce que**, pour le recyclage de la pression, l'alimentation en basse pression est raccordée à une zone d'air de service, par l'intermédiaire d'une unité de commande (50).

18. Dispositif selon l'une des revendications 11 à 17, **caractérisé en ce que** la zone d'air de service présente une pression d'environ 10 bars.

19. Dispositif selon l'une des revendications 11 à 18, **caractérisé en ce que**, pour le recyclage de la pression, l'alimentation en basse pression est raccordée à un étage de pression d'admission d'un compresseur à haute pression (40) par l'intermédiaire d'une unité de commande (45).

20. Dispositif selon l'une des revendications 11 à 19, **caractérisé en ce que**, dans la zone de basse pression, est disposé au moins un réservoir (42) pour l'accumulation de l'air à basse pression.

21. Dispositif selon l'une des revendications 11 à 20, **caractérisé en ce que** la roue de soufflage (25) est pourvue seulement d'un raccord tournant (59) pour l'admission d'air de soufflage à haute pression et qu'au moins un élément réducteur de pression est disposé sur la roue de soufflage (25) pour la mise à disposition d'une deuxième pression, différente de la haute pression.

22. Dispositif selon l'une des revendications 11 à 21, **caractérisé en ce que** la soupape de recyclage (47) est reliée, par l'intermédiaire d'un entrepôt (67), à une entrée d'un transformateur de pression (61) pour l'alimentation en basse pression.
